# EUROPÄISCHE PATENTSCHRIFT

(11) **EP 2 300 785 B1**
(45) Veröffentlichungstag und Bekanntmachung des Hinweises auf die Patenterteilung: **17.06.2020**
(21) Anmeldenummer: 09780205.2
(22) Anmeldetag: 07.07.2009
(51) Int. Cl.: G01F 15/18, G01F 1/66

(54) **VERFAHREN UND MESSSYSTEM ZUR BESTIMMUNG UND/ODER ÜBERWACHUNG DES DURCHFLUSSES EINES MESSMEDIUMS DURCH EIN MESSROHR**
METHOD AND MEASURING SYSTEM FOR DETERMINING AND/OR MONITORING THE FLOW RATE OF A MEASUREMENT MEDIUM THROUGH A MEASURING TUBE
PROCÉDÉ ET SYSTÈME DE MESURE PERMETTANT LA DÉTERMINATION ET/OU LA SURVEILLANCE DU DÉBIT D'UN MILIEU DE MESURE À TRAVERS UN TUBE DE MESURE

(30) Priorität: 23.07.2008 DE 102008034411
(43) Veröffentlichungstag der Anmeldung: 30.03.2011
(73) Patentinhaber: Endress+Hauser Flowtec AG, 4153 Reinach (CH)
(72) Erfinder: BERGER, Andreas, 79686 Hasel-Glashütten (DE); WIEST, Achim, 79576 Weil am Rhein (DE)
(74) Vertreter: Andres, Angelika Maria
(86) Internationale Anmeldenummer: PCT/EP2009/058538
(87) Internationale Veröffentlichungsnummer: WO 2010/009973

(56) Entgegenhaltungen:
- DE-A1- 10 147 175
- DE-A1-102008 033 701
- US-A1- 2007 107 533

## Beschreibung

Die vorliegende Erfindung betrifft ein Messsystem zur Bestimmung und/oder Überwachung des Durchflusses eines Messmediums durch ein Messrohr mit mindestens einer Regel-/Auswerteeinheit, welche anhand von Ultraschall-Messsignalen bzw. anhand von Messdaten, welche aus den Ultraschall-Messsignalen abgeleitet sind, den Volumen- und/oder den Massenstrom des in dem Messrohr strömenden Messmediums ermittelt, und mit mindestens zwei Ultraschallsensoren, wobei mindestens ein erster Ultraschallsensor verschiebbar in einem Sensorgehäuse gelagert ist und ein entsprechendes Verfahren zur Montage eines solchen Messsystems.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Doppler- oder nach dem Laufzeitdifferenz-Prinzip. Beim Laufzeitdifferenz-Prinzip werden die unterschiedlichen Laufzeiten von Ultraschallimpulsen relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen.

Reflexionen in der Flüssigkeit treten jedoch nur auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallwandler erzeugt bzw. empfangen. Hierfür sind Ultraschallwandler an der Rohrwandung des betreffenden Rohrleitungsabschnitts fest angebracht. Seit neuerem sind auch Clamp-on-Ultraschall-Durchflussmesssysteme erhältlich. Bei diesen Systemen werden die Ultraschallwandler nur noch mit einem Spannverschluss an die Rohrwandung gepresst. Derartige Systeme sind z. B. aus der EP 686 255 B1, US-A 44 84 478 oder US-A 45 98 593 bekannt. Ein weiteres Ultraschall-Durchflussmessgerät, das nach dem Laufzeitdifferenz-Prinzip arbeitet, ist aus der US-A 50 52 230 bekannt. Die Laufzeit wird hier mittels kurzen Ultraschallimpulsen ermittelt.

Ein großer Vorteil von Clamp-On-Ultraschall-Durchflussmesssystemen ist, dass sie das Messmedium nicht berühren und auf eine bereits bestehende Rohrleitung angebracht werden. Nachteilig ist ein hoher Aufwand bei der Montage der Clamp-On-Systeme, um die einzelnen Ultraschallwandler gegenseitig auszurichten, was von vielen Parametern, wie z.B. Rohrwanddicke, Rohrdurchmesser, Schallgeschwindigkeit im Messmedium, abhängt.

Die Ultraschallwandler bestehen normalerweise aus einem elektromechanischen Wandler, in der industriellen Prozessmesstechnik meist eine Piezokeramik, und einer Koppelschicht, auch Koppelkeil oder seltener Vorlaufkörper genannt. Die Koppelschicht ist dabei meist aus Kunststoff gefertigt. Im elektromechanischen Wandlerelement werden die Ultraschallwellen erzeugt und über die Koppelschicht zur Rohrwandung geführt und von dort in die Flüssigkeit geleitet. Da die Schallgeschwindigkeiten in Flüssigkeiten und Kunststoffen unterschiedlich sind, werden die Ultraschallwellen beim Übergang von einem zum anderen Medium gebrochen. Der Brechungswinkel bestimmt sich in erster Näherung nach dem Snell'schen Gesetz. Der Brechungswinkel ist somit abhängig von dem Verhältnis der Ausbreitungsgeschwindigkeiten in den Medien.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

Die US 6,397,683 B1 zeigt zwei Clamp-On-Ultraschallsensoren, die auf einer Rohrleitung mittels zweier Fixierbänder festschnallbar sind. Zum Verstellen des Abstsnds der beiden Sensoren, ist mindestens ein Sensor von der Rohrleitung zu lösen. Ebenfalls ist dessen Fixierband zu lösen. Beides ist nach einer Neuausrichtung wieder festzustellen. Das Koppelelement eines der Ultraschallsensoren ist zusammen mit dem auf ihm aufgebrachten piezoelektrischen Ultraschall-Wandlerelement in einem Gehäuse federnd gelagert.

Die US 5,131,278 zeigt eine mögliche Ausführung, zwei Ultraschallwandler auf einer Schiene, welche auf dem Messrohr fest anbringbar ist, verschiebbar zu lagern. Eine Schiene zur verschiebbaren Befestigung von Ultraschallsensoren ist ebenfalls in der EP 1 396 707 A1 und der EP 1 840 528 A2 dargestellt. Die Sensoren sind dabei federnd in der Schiene gelagert.

In der EP 1 783 464 A2 ist ein Führungsrahmen als Sensorhalteeinrichtung offenbart, welcher mittels zweier Befestigungseinrichtungen auf dem Messrohr befestigbar ist. Ein Gehäuse wird zum Schutz der Sensoren darüber gestülpt. Zur Wartung und Verschiebung der Sensoren muss das Gehäuse abgenommen werden.

Allen genannten Schriften gemein ist, dass die Sensoren während des Messbetriebs verschiebbar sind. Die Haltevorrichtungen sind dabei so ausgestaltet, dass nach ihrer Befestigung auf dem Messrohr die Sensoren in die gewünschte Position verschiebbar sind. Um die Sensoren vor mechanischen Einflüssen von außen zu schützen sind teilweise separat anzubringende Schutzgehäuse vorgesehen.

Die Aufgabe der Erfindung besteht darin, ein Durchfluss-Messsystem bereit zu stellen, welches sehr einfach zu montieren und einzustellen ist, wobei die Ultraschallsensoren vor Manipulationen von außen gut geschützt sind.

Die Aufgabe wird gelöst durch ein Messsystem zur Bestimmung und/oder Überwachung des Durchflusses eines Messmediums durch ein Messrohr mit mindestens einer Regel-/Auswerteeinheit, welche anhand von Ultraschall-Messsignalen bzw. anhand von Messdaten, welche aus den Ultraschall-Messsignalen abgeleitet sind, den Volumen- und/oder den Massenstrom des in dem Messrohr strömenden Messmediums ermittelt, und mit einem Sensorgehäuse, welches Sensorgehäuse einen ersten Ultraschallsensor und mindestens einen zweiten Ultraschallsensor umschließt, wobei zumindest der erste Ultraschallsensor verschiebbar im Sensorgehäuse gelagert ist, welches Messsystem weiterhin einen Sensorhalter aufweist, welcher Sensorhalter am Messrohr befestigbar ist und welcher Sensorhalter einen Befestigungsmechanismus zur lösbaren Befestigung des Sensorgehäuses am Sensorhalter aufweist, wobei das Sensorgehäuse mit den Ultraschallsensoren eine am Sensorhalter befestigbare und vom Sensorhalter lösbare Einheit bilden.

Das Sensorgehäuse, welches die beiden Ultraschallsensoren bereits umfasst, ist insbesondere kraft- und/oder formschlüssig mit dem Sensorhalter lösbar verbindbar. Nach der Montage des Sensorgehäuses am Sensorhalter ist kein zusätzlicher Montage- und/oder Einstellungsschritt der Ultraschallsensoren nötig.

Dabei umfasst der Befestigungsmechanismus ein Federblech, welches integraler Bestandteil des Sensorhalters ist oder welches mit dem Sensorhalter verbindbar ist, und einen Spannbügel aufweist, welcher Spannbügel am Sensorgehäuse drehbar gelagert ist und eine exzentrische Aussparung aufweist, wobei durch ein Eingreifen der exzentrischen Aussparung in das Federblech eine Kraft beim Umlegen des Spannbügels auf das Sensorgehäuse in Richtung des Messrohrs aufbringbar ist. Die Aussparung ist dabei insbesondere exzentrisch zur Drehachse des Spannbügels. Das Sensorgehäuse ist am Sensorhalter so ausrichtbar, dass die Ultraschallsensoren auf dem Messrohr in vorgebbaren Positionen positionierbar sind. Der erste Ultraschallsensor ist insbesondere verschiebbar in Richtung der Längsachse des Messrohrs. Dies kann gleichzeitig sie Längsachse des Sensorgehäuses darstellen. Definitionsgemäß handelt es sich hierbei um ein Clamp-On-Messsystem.

Das Messsystem kann dabei so ausgestaltet sein, dass die die Ultraschallsensoren im Sensorgehäuse gleichzeitig mit der Montage des Sensorgehäuses am Sensorhalter gegen Verschieben gesichert sind. Beispielsweise werden die Ultraschallsensoren mit einer vorgebbaren Kraft auf das Messrohr gedrückt, welche es dem Benutzer nicht ermöglicht, die Sensoren gewaltfrei zu verschieben, da u.a. auch das Gehäuse einen Zugang zu den Sensoren verhindert.

In einer bevorzugten Ausgestaltung der Erfindung sind die Ultraschallsensoren im montierten Zustand des Sensorgehäuses am Sensorhalter von außen bzw. von außerhalb des Gehäuses für den Benutzer nicht zugänglich. Sie sind somit vor groben mechanischen äußeren Einflüssen, wie z.B. vor Beschädigungen durch das Bedienpersonal, geschützt.

In einer bevorzugten Variante der Erfindung ist der Durchfluss mit einem Laufzeitdifferenzverfahren oder einem Dopplerverfahren ermittelbar. Gemäß einer vorteilhaften Weiterbildung des erfindungsgemäßen Messsystems weist das Sensorgehäuse auf einer dem Messrohr zugewandten Sensorgehäusewand einen Spalt auf, durch welchen Spalt zumindest der erste Ultraschallwandler zumindest teilweise aus dem Sensorgehäuse herausragt.

Das Sensorgehäuse umschließt die Ultraschallsensoren von mindestens fünf Seiten bzw. aus mindestens fünf Raumrichtungen. In der sechsten Seite des Sensorgehäuses, welche üblicherweise im montierten Zustand in Richtung des Messrohrs zeigt, ist ein schmaler Spalt. Durch diesen Spalt werden die Ultraschallsensoren mit dem Messrohr akustisch gekoppelt. Dabei kann ein Ultraschallsensor im Sensorgehäuse in Richtung der Spaltbreite eine größere Gestalt annehmen, als der Spaltbreite selbst.

Eine sehr vorteilhafte Weiterbildung des erfindungsgemäßen Messsystems ist darin zu sehen, dass eine Dichtung zwischen Messrohr und Sensorgehäuse auf der dem Messrohr zugewandten Sensorgehäusewand anordenbar ist. Üblicherweise ist bei einem Clamp-On-Messystem ein Koppelfett zwischen Ultraschallsensor und Messrohr angebracht. Dieses ist meist nicht gegenüber Witterung geschützt. So kann es häufig zu Messstörungen kommen aufgrund mangelndem oder fehlerhaftem Koppelfett und die Wartungsintervalle sind sehr kurz. Eine Dichtung zwischen Sensorgehäuse und Messrohr schützt das Koppelfett vor Austrocknung, Verdunstung, direkter Sonneneinstrahlung, Wasser oder andere Witterung.

Bevorzugt ist die Dichtung als Dichtlippe um den Spalt, durch welchen zumindest der erste Ultraschallsensor heraus ragt, geführt. Dabei können unterschiedlichste Ausführungen und Materialen zum Einsatz kommen. Beliebige Arten von O-Ringen sind zu Dichtzwecken bekannt geworden oder eine einfache Schicht an dichtendem Silikon kann aufgebracht werden.

In einer weiteren Ausgestaltung ist die Dichtung zwischen Messrohr und Sensorgehäuse elektrisch leitfähig und/oder elektrisch leitfähig beschichtet. Ist das Sensorgehäuse aus Metall und/oder leitfähig beschichtet, kann der Ultraschallsensor durch den Spalt elektromagnetische Störungen von außen empfangen. Ist das Messrohr ebenfalls aus Metall gefertigt und/oder leitfähig beschichtet, kann mit einer leitfähigen und/oder leitfähig beschichteten Dichtung eine bessere Abschirmung gegen elektromagnetische Störungen erzielt werden. Dazu könnte eine Kunststoff-Dichtung z.B. mit einem Spray leitfähig beschichtet werden. Gleichermaßen ließe sich ein Kunststoffmessrohr, zumindest an der von der Dichtung umschlossenen Fläche, elektrisch leitfähig beschichten. Zusammen mit dem ebenfalls leitfähigen und/oder leitfähig beschichteten Sensorgehäuse ist somit ein faradayscher Käfig gebildet.

Eine weitere vorteilhafte Weiterbildung des erfindungsgemäßen Messsystems sieht vor, dass das Sensorgehäuse auf der dem Messrohr zugewandten Sensorgehäusewand, zwischen Sensorgehäusewand und Messrohr zumindest einen Anschlag aufweist, welcher Anschlag im montierten Zustand des Messsystems am Messrohr anliegt und zwischen Sensorgehäusewand und Messrohr einen Abstand h definiert, bis zu welchem Abstand h die Dichtung zwischen Sensorgehäusewand und Messrohr eindrückbar ist.

Das Sensorgehäuse besteht beispielsweise aus einem rohrförmigen Mittelteil, z.B. ein Vierkantrohr, mit zunächst offenen Enden. Diese Enden werden von Endkappen verschlossen. Die Endkappen stehen nun ein Stück über eine bestimmte Seite des Sensorgehäuses, insbesondere die dem Messrohr im montierten Zustand zugewandte Seite, über. Somit bilden die Endkappen den Anschlag, der im montierten Zustand am Messrohr anliegt und den Abstand h zwischen Messrohr und Messrohr zugewandte Seite des Sensorgehäuses definiert. Der Abstand h entspricht somit der Länge des Überstands.

Eine alternative Lösung zur Bildung des Anschlags stellen die Ultraschallsensoren selbst dar. Sind die Sensoren federnd im Sensorgehäuse gelagert, lassen sie sich also in Richtung des von dem Sensorgehäuse umschlossenen Innenraums des Sensorgehäuses einfedern, so kann durch eine Begrenzung dieser Einfederung ein Überstand der Ultraschallsensoren über die dem Messrohr in montiertem Zustand des Messsystems zugewandte Seite des Sensorgehäuses hergestellt sein, welcher Überstand insbesondere die vorgebbare Höhe h aufweist und somit ein Eindrücken der umgebenden Dichtung auf h begrenzt.

Eine sehr vorteilhafte Weiterbildung der erfindungsgemäßen Lösung besteht darin, dass das Sensorgehäuse auf der dem Messrohr zugewandten Sensorgehäusewand, zwischen Sensorgehäusewand und Messrohr zumindest einen Anschlag aufweist, welcher Anschlag im montierten Zustand des Messsystems am Messrohr anliegt und zwischen Sensorgehäusewand und Messrohr einen Abstand h definiert, bis zu welchem Abstand h zumindest der erste Ultraschallsensor im montierten Zustand aus dem Sensorgehäuse herausragt.

Sind die Ultraschallsensoren z.B. federnd im Sensorgehäuse gelagert und sind sie in Richtung des von dem Sensorgehäuse umschlossenen Innenraums des Sensorgehäuses eindrückbar, sie lassen sich also in Richtung des von dem Sensorgehäuse umschlossenen Innenraums des Sensorgehäuses einfedern, kann diese Einfederung durch einen Anschlag begrenzt werden. Stehen die Sensoren im nicht montierten Zustand mit einem Abstand größer h über die dem Messrohr im montiertem Zustand des Messsystems zugewandte Seite des Sensorgehäuses über, so kann der Überstand im montierten Zustand des Messsystems auf die Höhe h des Anschlags begrenzt werden, der beispielsweise aus mindestens einer Endkappe des Sensorgehäuses bildbar ist und im montierten Zustand am Messrohr anliegt.

Gemäß einer vorteilhaften Weiterbildung des erfindungsgemäßen Messsystems wird vorgeschlagen, dass der Sensorhalter eine erste Funktionsfläche zur Ausrichtung des Sensorhalters am Messrohr aufweist. Weiterhin weist der Sensorhalter vorteilhaft mindestens eine zweite Funktionsfläche zur Ausrichtung des Sensorgehäuses am Sensorhalter auf.

Bei einer sehr vorteilhaften Weiterbildung der Erfindung ist der Sensorhalter mit einer definierbaren ersten Kraft am Messrohr anbringbar und dass das Sensorgehäuse ist mit einer definierbaren, von der ersten Kraft unabhängigen, zweiten Kraft anbringbar, welche zweite Kraft über den Befestigungsmechanismus zwischen Sensorhalter und Sensorgehäuse am Messrohr einleitbar ist.

Die erste Kraft wirkt zwischen Messrohr und Sensorhalter. Der Sensorhalter wird beispielsweise mit der ersten Kraft auf das Messrohr gedrückt. Die zweite Kraft wirkt zwischen Messrohr und Sensorgehäuse. Diese zweite Kraft ist insbesondere über den Sensorhalter und/oder den Befestigungsmechanismus auf das Sensorgehäuse aufbringbar. So wird beispielhaft der Sensorhalter mittels Spannbügeln mit der ersten Kraft auf das Messrohr angedrückt und der Sensorhalter bringt zusammen mit dem Befestigungsmechanismus die zweite Kraft, welche zweite Kraft kleiner ist als die erste Kraft, auf das Sensorgehäuse in Richtung des Messrohrs auf und drückt so dieses auf das Messrohr.

Bei federnd gelagerten Ultraschallsensoren und mit einem Sensorgehäuse mit Anschlag, sind auch die Ultraschallsensoren selbst mit einer definierbaren Kraft auf das Messrohr andrückbar. Insbesondere ist dann die Kraft, welche insbesondere über den Sensorhalter und/oder den Befestigungsmechanismus auf das Sensorgehäuse aufgebracht wird, mit der das Sensorgehäuse auf dem Messrohr feststellbar ist größer, als die Kraft mit welcher ein Ultraschallsensor gegen das Rohr gedrückt wird.

Bei einer weiteren vorteilhaften Weiterbildung der Erfindung ist zumindest der im Sensorgehäuse verschiebbare erste Ultraschallsensor beim Befestigen des Sensorgehäuses am Sensorhalter gegen Verschieben feststellbar.

Gleichzeitig mit dem Betätigen des Befestigungsmechanismus sind somit die Ultraschallsensoren im Sensorgehäuse gegen Verschiebungen gesichert sind. Verschiebungen, gegen welche die Ultraschallsensoren sicherbar sind, können z.B. durch Vibrationen entstehen.

Die Ultraschallsensoren lassen sich auf viele mögliche Arten gegen Verschieben feststellen. Einige Alternativen sind im Folgenden kurz dargestellt.

Eine mögliche Variante ist die federnde Lagerung des verschiebbaren ersten Ultraschallsensors. Die Feder ist dabei bevorzugt zwischen Ultraschallsensor, der von einer ersten Innenfläche des Sensorgehäuses zumindest anteilig abstützbar ist, und einem Führungsbügel angeordnet, welcher Führungsbügel die den Ultraschallsensor abstützenden ersten Innenfläche gegenüberliegenden zweiten Innenfläche zumindest teilweise berührt. Der Führungsbügel bildet zusammen mit der zweiten Innenfläche ein Wirkflächenpaar, zwischen welchen Wirkflächen Reibung entsteht beim Versuch den Ultraschallsensor im Sensorgehäuse zu verschieben, also gewissermaßen ein Reibflächenpaar. Die Federkraft bzw. die Federkonstante, die Auslenkung der Feder und die Oberflächenbeschaffenheiten der einzelnen Wirkflächen bestimmen die Kraft, die notwendig sind, den Führungsbügel zusammen mit der Feder und dem Ultraschallsensor im Sensorgehäuse zu verschieben. Diese können nun so ausgelegt sein, dass der Ultraschallsensor im nicht montierten Zustand sehr leicht von Hand verschiebbar ist und dass der Ultraschallsensor im montierten Zustand gegen Verschiebungen gesichert ist.

Weitere Möglichkeiten, den Ultraschallsensor gegen Verschiebungen zu sichern sind z.B. zahnstangenähnliche zueinander ausgerichtete Ausstülpungen und Einbuchtungen auf einer einem Ultraschallsensor zugewandten Seite eines Führungsbügels eines federnd gelagerten Ultraschallsensors und der dem Messrohr abgewandten Seite des Ultraschallsensors, welche im montierten Zustand des Messsystems ineinander greifen und den Ultraschallsensor gegen Verschieben sichern, ähnlich dem vorher beschriebenen Reibschluss, hier als formschlüssige Verbindung, oder verschiedene Klemmmechanismen, wie ein Spalt in der der Ultraschallsensor geführt ist, wobei sich der Spalt bei Betätigen des Befestigungsmechanismus verengt und den Ultraschallwandler einklemmt und somit sichert.

In einer besonders bevorzugten Ausgestaltung der Erfindung sind die Federkraft und die Reibflächenpaarung, gebildet aus erster Innenfläche des Sensorgehäuses und daran anliegender Fläche des Koppelelements, so auslegbar, dass der Ultraschallsensor im nicht montierten Zustand von Hand verschiebbar ist und/oder die Federkraft und die Reibflächenpaarung, gebildet aus zweiter Innenfläche des Sensorgehäuses und daran anliegender Fläche des Führungsbügels, sind so auslegbar, dass der Ultraschallsensor im nicht montierten Zustand von Hand nicht verschiebbar ist. Der Ultraschallsensor ist z.B. im Sensorgehäuse sowohl im montierten, als auch im nicht montierten Zustand, mindestens gegen eine Kraft von der doppelten Erdbeschleunigung mal dem Eigengewicht des Ultraschallsensors in Richtung einer axialen Verschiebung im Sensorgehäuse sicherbar. Im montierten Zustand kann die Kraft, gegen die der Sensor sicherbar ist, auch weitaus höher sein.

Gemäß einer weiteren vorteilhaften Weiterbildung der erfindungsgemäßen Lösung weist der Sensorhalter die Form eines Befestigungsblechs mit prismatischer Ausbuchtung auf der dem Messrohr zugewandten Seite zur Ausrichtung des Sensorhalters am Messrohr und mit einer mittig angeordneten Aussparung und daran angebrachten Seitenlaschen zur Aufnahme und zur Ausrichtung des Sensorgehäuses am Messrohr auf.

Die prismatische Ausbuchtung ist bevorzugt auf einer Mittelachse am Sensorhalter auf der dem Messrohr zugewandten Seite des Sensorhalters angebracht. Sie dient als Funktionsfläche, um den Sensorhalter parallel zu einer Mantelgeraden des Messrohrs am Messrohr auszurichten. Einfach ist diese Ausbuchtung als Biegung des Befestigungsblechs herstellbar.

Ein solcher Sensorhalter ist für verschiedene Messrohrdurchmesser einsetzbar. Es sind jedoch auch für verschiedene Rohrdurchmesser Sensorhalter mit speziellen Größen und/oder Formen fertigbar.

Weiter wird die der Erfindung zugrunde liegende Aufgabe gelöst durch ein Verfahren zur Montage des erfindungsgemäßen Messsystems, wobei der Sensorhalter auf dem Messrohr angebracht wird und anschließend das bereits vormontierte Sensorgehäuse mit darin vorjustierten Ultraschallsensoren an dem Sensorhalter ausgerichtet und anschließend festgemacht wird.

Ist der Sensorhalter als Befestigungsblech ausgeführt und weist der Befestigungsmechanismus ein Federblech am Sensorhalter und einen am Sensorgehäuse drehbar gelagerten Spannbügel auf, so wird das Befestigungsblech auf dem Messrohr angebracht und anschließend wird das bereits vormontierte Sensorgehäuse mit darin vorjustierten Ultraschallsensoren an dem Sensorhalter ausgerichtet und durch Umlegen des Spannbügels, dessen exzentrische Aussparung in das Federblech eingreift, am Messrohr festgemacht.

Gemäß einer vorteilhaften Weiterbildung des erfindungsgemäßen Verfahrens wird gleichzeitig mit der Befestigung des Sensorgehäuses am Sensorhalter zumindest der verschiebbare erste Ultraschallsensor gegen Verschiebung gesichert.

Ein großes Problem bisheriger Clamp-On-Messysteme ist die Wartung der Sensoren und der Austausch von Koppelfett zwischen Messrohr und Ultraschallsensor. Ein Vorteil dieser Lösung ist, dass das Sensorgehäuse mitsamt den Ultraschallsensoren mit jeweils einem Handgriff auf dem Messrohr befestigbar und wieder lösbar ist. Bisher wurden die Sensoren gleichzeitig mit einer sie führenden, offenen Schiene am Messrohr montiert. Anschließend erfolgte die Verstellung der Sensoren. Hier wird das Verstellen der Sensoren von der Montage des Gehäuses abgekoppelt und die Sensoren durch äußere Einflüsse durch das Gehäuse geschützt. Die Sensoren sind somit während des Betriebs des Messsystems gegen Verstellen und damit gegen Manipulation geschützt. Falls im Betrieb und/oder im montierten Zustand des Messsystems, d.h. auf dem Messrohr aufgesetztem Sensorgehäuse, eine Verschiebung zumindest des ersten Ultraschallsensors festgestellt wird bzw. eine solche feststellbar ist und/oder eine Loslösung des Sensorgehäuses vom Sensorhalter oder eine Öffnung des Befestigungsmechanismus, ist ein Alarmsignal ausgebbar. Das Messsystem ist so ausgestaltet, eine Verschiebung des zumindest ersten Ultraschallsensors und/oder ein Lösen des Sensorgehäuses vom Sensorhalter oder eine Öffnung des zu detektieren.

Die Erfindung wird anhand der nachfolgenden Figuren näher erläutert.
Fig. 1 zeigt perspektivisch ein erfindungsgemäßes Messsystem auf einem Messrohr montiert,
Fig. 2 zeigt perspektivisch ein Befestigungsblech als Sensorhalter,
Fig. 3 zeigt perspektivisch einen Sensorhalter auf einem Messrohr montiert,
Fig. 4 zeigt perspektivisch ein Sensorgehäuse mit Dichtlippe.

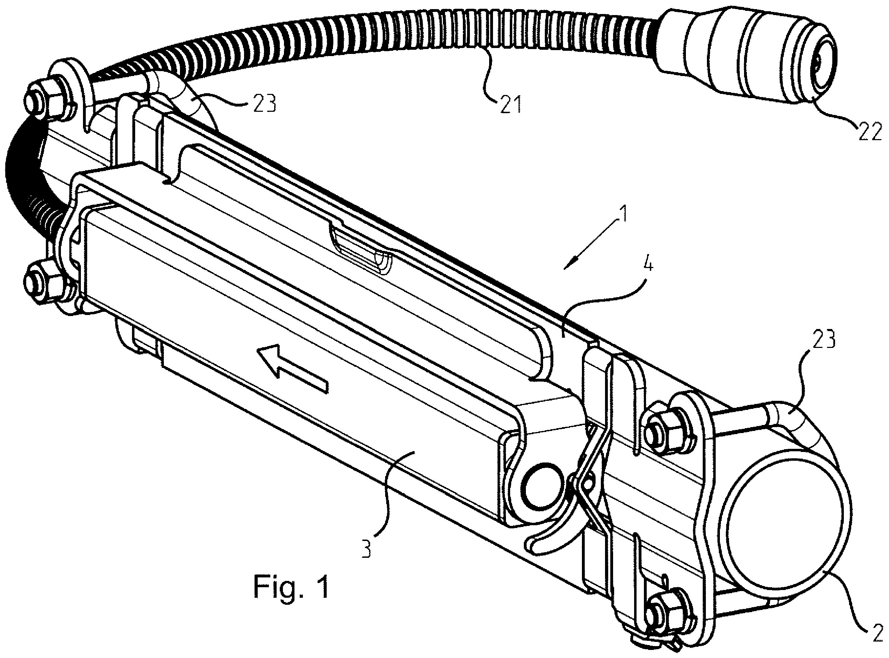

In Fig. 1 ist ein auf einem Messrohr 2 montiertes Messsystem 1 dargestellt, bestehend aus einem Sensorgehäuse 3 und einem Sensorhalter 4. Die Ultraschallsensoren sind vom Sensorgehäuse 3 umgeben und liegen mit ihren Schallein- bzw. Schallauskoppelflächen auf dem Messrohr auf. Daher sind sie in dieser Darstellung nicht zu sehen. Dies zeigt jedoch, dass die Ultraschallsensoren von außen für den Benutzer nicht zugänglich und damit nicht verschiebbar sind und dass sie vor mechanischen Einflüssen von außen gut geschützt sind. Vom Sensorgehäuse 3 weg führt ein Anschlusskabel 21 mit einem Anschlussstecker 22 zum Anschluss der Ultraschallsensoren an eine Regel-/Auswerteeinheit. Die Regel-/Auswerteeinheit selbst ist der Einfachheit halber nicht dargestellt. Der Sensorhalter 4 ist mit U-Bügeln 23 am Messrohr 2 festgespannt. Die U-Bügel 23 können aus elastischem Material mit einer federnden Wirkung sein oder, wie hier dargestellt, aus einem relativ formstabilen Stahl. Sie werden über Schraubverbindungen mit dem Sensorhalter 4 verbunden.

Durch die besondere Konstruktion des Sensorhalters 4 wird das Messrohr 2 durch die notwendige Spannkraft der U-Bügel 23 nicht deformiert. Der Sensorhalter 4 ist als Befestigungsblech 26 ausgeführt, welches einen Schlitz 30 zur Kräftetrennung zwischen dem Bereich der Aufnahme des Sensorgehäuses 3 und dem Bereich der Aufnahme 32 der Befestigungsmittel aufweist. Als Befestigungsmittel sind U-Bügel 23 vorgesehen. Die Aufnahmen 32 der Befestigungsmittel weisen Bohrungen 33 zur Befestigung der U-Bügel auf und Führungen 34 zur Führung von Spannbändern. Beide Aufnahmen ermöglichen die Befestigung des Befestigungsblechs 26 am Messrohr mittels bestimmten Kräften. Die Aufnahmen stehen dabei etwas über die am Messrohr 2 anliegenden Flächen 10 des Sensorhalters 26 über, d.h. die Ränder der Spannbandführungen 34 und die Bohrungen 33 zur Aufnahme der U-Bügel 23 berühren nicht das Messrohr 2 und bieten daher eine gewisse Federwirkung. Somit werden beispielsweise Kräfte, die das Rohr deformieren könnten, welche z.B. bei der Montage irrtümlich über das Anzugsdrehmoment der U-Bügel 23 oder die Spannung der Spannbänder 24 aufgebracht werden, vom Befestigungsblech abgefedert und daher nur abgemildert auf das Rohr übertragen. Das Befestigungsblech 26 bietet eine gewisse Flexibilität und Elastizität. Durch die Schlitze 30 wird einerseits diese Elastizität erhöht und andererseits werden die Kräfte zur Befestigung des Sensorhalters 26 am Messrohr 2 vom Befestigungsmechanismus zur Befestigung des Sensorgehäuses am Messrohr 2 abgekoppelt. Die Schlitze 30 führen dabei bevorzugt von den Rändern des Befestigungsblechs bis zu den Flächen des Befestigungsblechs, die in Kontakt zu dem Messrohr 2 stehen.

Weiter weist das Befestigungsblech 26 neben der prismatischen Aussparung 27, welche als erste Funktionsfläche zur Ausrichtung des Sensorhalters 4 bzw. des Befestigungsblechs 26 am Messrohr 2 dient, eine zweite Funktionsfläche zur Ausrichtung des Sensorgehäuses 3 am Sensorhalter 4 bzw. am Messrohr 2 auf. Hier dienen als zweite Funktionsflächen die Seitenlaschen 28. Das Sensorgehäuse 3 wird zwischen die Seitenlaschen 28 des Sensorhalters bzw. in diesem Fall des Befestigungsblechs 26 platziert. Durch die Aussparung 16 im Sensorhalter 26, welche zwischen den Seitenlaschen 28 liegt, tritt das Sensorgehäuse 3 mit dem Messrohr 2 in Kontakt. Über ein Federblech 20 mit einem Stift 31 wird das Sensorgehäuse 3 auf dem Befestigungsblech 26 befestigt. Federblech 20 mit Stift 31 bilden den ersten Teil des Befestigungsmechanismus. Der hier nicht dargestellte, drehbar am Sensorgehäuse 3 gelagerte Spannbügel 17 ist ein weiterer Teil des Befestigungsmechanismus. Das Federblech 20 kann dabei integraler Bestandteil des Sensorhalters, oder wie hier, ein am Sensorhalter 4 zu befestigendes Teil sein. Der Stift 31 ist in diesem Falle ebenfalls mit dem Federblech 20 stoff-, form- oder Kraftschlüssig verbunden.

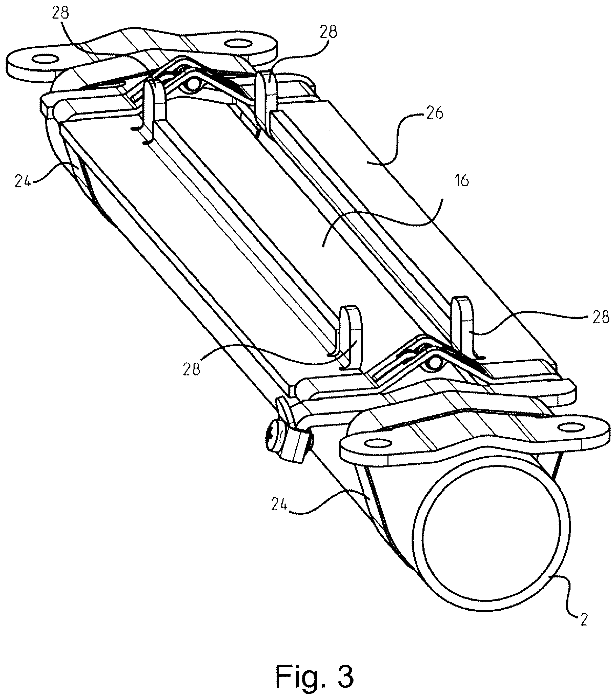

Fig. 3 zeigt ein Messrohr 2 mit aufgebrachtem Sensorhalter 4. Der Sensorhalter 4, wieder als Befestigungsblech 26 ausgeführt, ist mit Spannbändern 24 auf das Messrohr geschnallt. Die Schlitze 30 im Befestigungsblech 26 haben die gleiche, zuvor beschriebene Funktion und Wirkung wie bei der Montage des Befestigungsblechs 26 mit U-Bügeln.

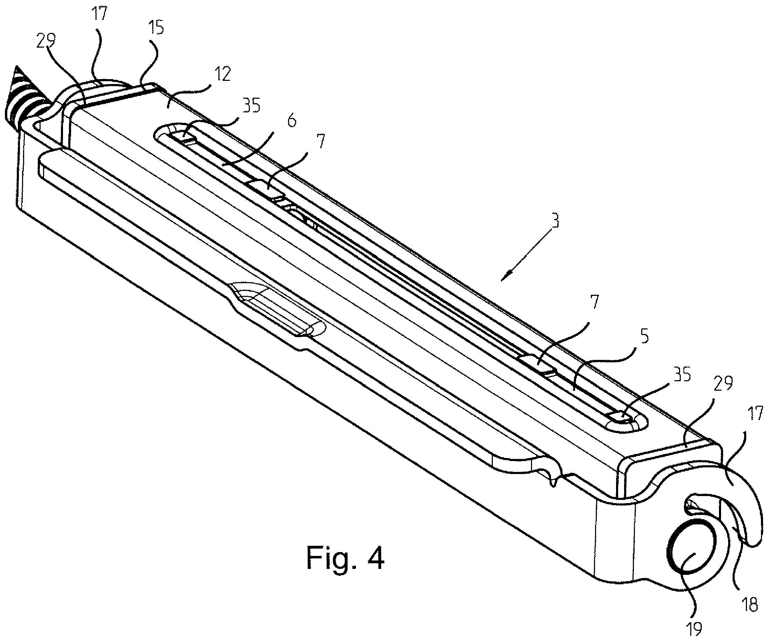

In Fig. 4 offenbart ein Sensorgehäuse 3 mit einem Spalt, einem in dem Spalt verschiebbaren Ultraschallsensor 5 und einem um die Drehachse 19 drehbar gelagertem Spannbügel 17 mit exzentrischer Aussparung 18. Der Spalt in der ersten Sensorgehäusewand 12 ist mit einer Dichtung versehen. Die Dichtung führt um den Spalt auf der außen liegenden Seite der ersten Sensorgehäusewand 12. Diese ist im montierten Zustand dem Messrohr 2 zugewandt. Die Dichtung liegt im montierten Zustand des Messsystems als zwischen Messrohr 2 und Sensorgehäuse 3 und dichtet den Spalt nach außen ab, so dass kein Schmutz, Staub, Spritzwasser oder ähnliches in das Sensorgehäuse 3 gelangen kann oder dass eventuell auf dem Messrohr 2 aufgebrachtes Koppelfett verunreinigt wird. Die Dichtung schützt das Koppelfett z.B. auch vor Sonneneinstrahlung.

Das Sensorgehäuse 3 ist bis auf den Spalt nach außen dicht. Es besteht bevorzugt aus einem Vierkantrohr mit Endkappen 29, welche das Vierkantrohr an seinen Enden verschließen. Die Endkappen 29 stehen hier auf der Seite der ersten Sensorgehäusewand 12 etwas über und bilden so einen Anschlag 15 mit der Höhe h. Wird das Sensorgehäuse 3 auf ein Messrohr 2 gedrückt, treten die Endkappen 29 bzw. die Anschläge 15 direkt in Kontakt mit dem Messrohr 2. Die dem Messrohr zugewandte Sensorgehäusewand 12 hat somit einen Abstand h zum Messrohr. Die dazwischen liegende Dichtung wird bis zum Abstand h verpresst. Die Ultraschallsensoren 5, 6 weisen jeweils eine Schalleinkoppel- bzw. Schallauskoppelfläche 7 auf, über welche das Ultraschall-Messsignal in das Messrohr 2 eingekoppelt bzw. aus dem Messrohr 2 ausgekoppelt wird, und eine Stützfläche 35, welche in einer Ebene mit der Schalleinkoppel- bzw. Schallauskoppelfläche 7 liegt. Diese Flächen 7, 35 stehen ebenfalls im nicht montierten Zustand aus der ersten Sensorgehäusewand 12 heraus. Im montierten Zustand stehen beide Flächen 7, 35 in Kontakt mit dem Messrohr 2. Entsprechend der Höhe h des Anschlags 15 werden auch die Ultraschallsensoren 5, 6 in das Sensorgehäuse 3 hinein verschoben. Die Ultraschallsensoren 5, 6 sind bevorzugt federnd im Sensorgehäuse 3 gelagert.

Das Innere des Sensorgehäuses 3 ist für den Benutzer lediglich über den Spalt zerstörungsfrei zugänglich. Da der Spalt im montierten Zustand des Messsystems 1 jedoch nach außen abgedichtet ist, sind die Sensoren 5, 6 nicht mehr für den Benutzer zugänglich. Somit ist kein Verschieben der Ultraschallsensoren 5, 6 mit ihren empfindlichen Schallein- und -auskoppelflächen 7 auf dem Messrohr 2 möglich, womit diese gegen mechanische Beschädigungen von außen, wie z.B. gegen Verkratzen gesichert sind.

Das Sensorgehäuse 3 wird mit der ersten Sensorgehäusewand 12 Richtung Messrohr 2 an dem Sensorhalter 4 angebracht. Dazu muss der Spannbügel 17 aus der dargestellten Endstellung in eine Ausgangsstellung umgelegt werden. Das offene Ende der exzentrischen Aussparung 18 weist in der Endstellung, also im montierten Zustand, vom Messrohr 2 bzw. Von der Sensorgehäusewand 12 weg.

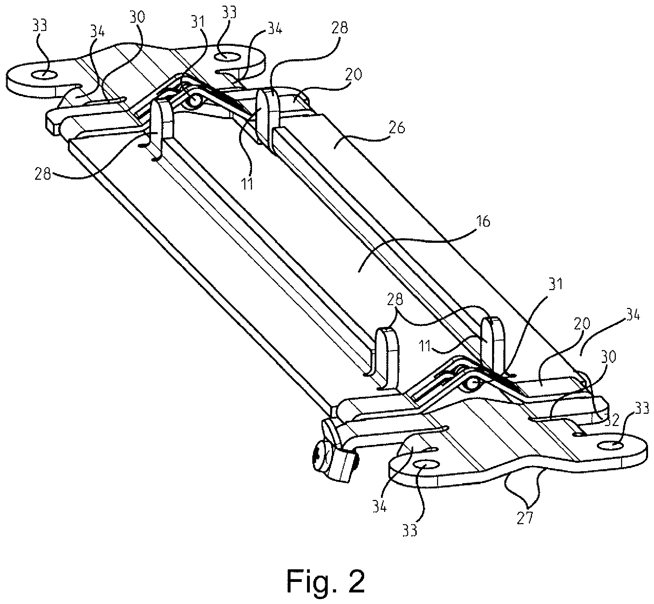

Wie in Fig. 1 bis Fig. 4 zu sehen, sind Sensorgehäuse 3 und Sensorhalter 4 so ausgestaltet, dass das Sensorgehäuse 3 im Sensorhalter 4 zum Messrohr 2 hin ausrichtbar und lösbar feststellbar ist. Dazu wird das Sensorgehäuse 3 in Aussparung 16 zwischen Seitenlaschen 28 des Sensorhalters 4 eingesetzt. Der Spannbügel 17 steht dabei in Ausgangsstellung. Durch das Umlegen des Spannbügels 17 bis zur Endstellung greift der Spannbügel 17 mit seiner exzentrischen Aussparung 18 in das Federblech 20 mit Stift 31 ein. Die exzentrische Aussparung 18 wird also um den Stift 31 geführt. Durch die Exzentrizität der Aussparung 18 wird beim Umlegen des Spannbügels 17 das Sensorgehäuse 3 in Richtung Messrohr 2 gezogen und so auf das Messrohr 2 gedrückt. Dabei wird die Dichtung bis zur Höhe h des Anschlags 15 zusammen gedrückt, womit sie das Sensorgehäuse 3 zusammen mit dem Messrohr 2 nach außen abdichtet, und die Ultraschallsensoren 5, 6, welche im nicht montierten Zustand aus dem Sensorgehäuse 3 über die Höhe h herausstehen, werden ebenfalls bis zur Höhe h, mit welcher sie im montierten Zustand über die Sensorgehäusewand 12 ragen, des Anschlags 15 in das Sensorgehäuse 3 verschoben. Vor dem Aufsetzen des Sensorgehäuses 3 wird eine nicht dargestellte Koppelmatte zwischen Sensorgehäuse 3 und Messrohr 2 angebracht oder es wird ein Koppelfett zwischen Sensorgehäuse 3 und Messrohr 2 angebracht. Durch die federnde Wirkung des Federblechs 20 ist das Sensorgehäuse 3 mit einer vorgegebenen Kraft auf dem Messrohr lösbar festgestellt und garantiert das Anliegen des Sensorgehäuses 3 am Messrohr 2. Gleichzeitig ist der Sensorhalter 4 als Befestigungsblech 26 mit Schlitzen 30 ausgestattet, so dass die Kräfte, mit denen das Befestigungsblech 26 an dem Messrohr 2 angebracht ist, von dem Befestigungsmechanismus des Sensorgehäuses 3 am Befestigungsblech 26 bzw. am Messrohr 2 abgekoppelt. Durch die Form der exzentrischen Aussparung 18 im Spannbügel ist die elastische Befestigung des Sensorgehäuses 3 am Sensorhalter 4 bzw. am Messrohr 2 selbsthemmend.

Außer mit dem dargestellten Spannbügel 17, welcher zusammen mit dem Federblech 20 den Befestigungsmechanismus bildet, sind weitere Befestigungsmechanismen denkbar. So ist das Sensorgehäuse z.B. mittels federnden Spannbändern auf das Messrohr aufschnallbar oder die Befestigung erfolgt mittels Magneten am Sensorhalter und/oder am Sensorgehäuse oder das Sensorgehäuse rastet an am Sensorhalter vorgesehenen Federelementen ein, ähnlich eines Schlosses eines Kabelbinders oder eines Kippschalters, wodurch es durch erhöhte Zugkraft wieder entfernbar wäre.

Umgekehrt ist der Spannbügel auch auf dem Sensorhalter 4 drehbar lagerbar und entsprechende Stifte, in welche der Spannbügel dann eingreifen kann, sind am Sensorgehäuse angebracht. Somit würden lediglich die Teile des Befestigungsmechanismus getaucht, die Funktion bliebe die Gleiche.

Sensorhalter 4 sind für verschieden große Messrohre 2 speziell anfertigbar oder sie besitzen ein ausreichend große prismatische Aussparung zur Platzierung an verschieden großen Rohren.

### Bezugszeichenliste

- 1: Durchfluss-Messsystem
- 2: Messrohr
- 3: Sensorgehäuse
- 4: Sensorhalter
- 5: Erster Ultraschallsensor
- 6: Zweiter Ultraschallsensor
- 7: Ultraschalleinkoppelfläche/Ultraschallauskoppelfläche
- 8: Regel-/Auswerteeinheit
- 9: Befestigungsmechanismus
- 10: Erste Funktionsfläche
- 11: Zweite Funktionsfläche
- 12: Erste Sensorgehäusewand
- 13: Spalt im Sensorgehäuse
- 14: Dichtung
- 15: Anschlag
- 16: Aussparung im Sensorhalter
- 17: Spannbügel
- 18: Exzentrische Aussparung des Spannbügels
- 19: Drehachse des Spannbügels
- 20: Federblech mit Stift
- 21: Anschlusskabel
- 22: Anschlussstecker
- 23: U-Bügel
- 24: Spannband
- 25: Messmedium
- 26: Befestigungsblech
- 27: Prismatische Aussparung
- 28: Seitenlaschen
- 29: Endkappe
- 30: Schlitz im Befestigungsblech
- 31: Stift im Federblech
- 32: Aufnahme der Befestigungsmittel
- 33: Bohrung
- 34: Spannbandführung
- 35: Stützfläche

## Patentansprüche

1. Messsystem (1) zur Bestimmung und/oder Überwachung des Durchflusses eines Messmediums (25) durch ein Messrohr (2) mit mindestens einer Regel-/Auswerteeinheit (8), welche anhand von Ultraschall-Messsignalen bzw. anhand von Messdaten, welche aus den Ultraschall-Messsignalen abgeleitet sind, den Volumen- und/oder den Massenstrom des in dem Messrohr (2) strömenden Messmediums (25) ermittelt, und mit einem Sensorgehäuse (3), welches Sensorgehäuse (3) einen ersten Ultraschallsensor (5) und mindestens einen zweiten Ultraschallsensor (6) umschließt, wobei zumindest der erste Ultraschallsensor (5) verschiebbar im Sensorgehäuse (3) gelagert ist welches Messsystem (1) weiterhin einen Sensorhalter (4) aufweist, welcher Sensorhalter (4) am Messrohr (2) befestigbar ist und welcher Sensorhalter (4) einen Befestigungsmechanismus zur lösbaren Befestigung des Sensorgehäuses (3) am Sensorhalter (4) aufweist, wobei das Sensorgehäuse (3) mit den Ultraschallsensoren (5, 6) eine am Sensorhalter (4) befestigbare und vom Sensorhalter (4) lösbare Einheit bilden,
**dadurch gekennzeichnet, dass** der erste Ultraschallsensor und der zweite Ultraschallsensor federnd gelagert sind und somit durch eine definierbare Kraft auf das Messrohr andrückbar sind,
wobei der Befestigungsmechanismus ein Federblech (20), welches integraler Bestandteil des Sensorhalters (4) ist oder welches mit dem Sensorhalter verbindbar ist, und einen Spannbügel (17) aufweist, welcher Spannbügel (17) am Sensorgehäuse (3) drehbar gelagert ist und eine exzentrische Aussparung (18) aufweist, wobei durch ein Eingreifen der exzentrischen Aussparung (18) in das Federblech (20) eine Kraft beim Umlagen des Spannbügels (17) auf das Sensorgehäuse (3) in Richtung des Messrohrs (2) aufbringbar ist.

2. Messsystem (1) nach Anspruch 1,
**dadurch gekennzeichnet,**
**dass** das Sensorgehäuse (3) auf einer dem Messrohr (2) zugewandten Sensorgehäusewand (12) einen Spalt aufweist. durch welchen Spalt zumindest der erste Ultraschallwandler (5) zumindest teilweise aus dem
Sensorgehäuse (3) herausragt.

3. Messsystem (1) nach Anspruch 1 oder 2,
**dadurch gekennzeichnet,**
**dass** eine Dichtung zwischen Messrohr (2) und Sensorgehäuse (3) auf der dem Messrohr zugewandten Sensorgehäusewand (12) anordenbar ist.

4. Messsystem (1) nach Anspruch 3,
**dadurch gekennzeichnet,**
**dass** das Sensorgehäuse (3) auf der dem Messrohr (2) zugewandten Sensorgehäusewand (12), zwischen Sensorgehäusewand (12) und Messrohr (2) zumindest einen Anschlag (15) aufweist, welcher Anschlag (15) im montierten Zustand des Messsysteme (1) am Messrohr (2) anliegt und
zwischen Sensorgehäusewand (12) und Messrohr (2) einen Abstand h definiert, bis zu welchem Abstand h die Dichtung zwischen
Sensorgehäusewand (12) und Messrohr (2) eindrückbar ist.

5. Messsystem (1) nach einem der Ansprüche 1 bis 4,
**dadurch gekennzeichnet,**
**dass** das Sensorgehäuse (3) auf der dem Messrohr (2) zugewandten Sensorgehäusewand (12), zwischen Sensorgehäusewand (12) und Messrohr (2) zumindest einen Anschlag (15) aufweist, welcher Anschlag (15) im montierten Zustand des Messsysteme (1) am Messrohr (2) anliegt und
zwischen Sensorgehäusewand (12) und Messrohr (2) einen Abstand h definiert, bis zu welchem Abstand h zumindest der erste Ultraschallsensor (5) im montierten Zustand aus dem Sensorgehäuse (3) herausragt.

6. Messsystem (1) nach einem der Ansprüche 1 bis 5,
**dadurch gekennzeichnet,**
**dass** der Sensorhalter (4) eine erste Funktionsfläche (10) zur Ausrichtung des Sensorhalters (4) am Messrohr (2) aufweist.

7. Messsystem (1) nach einem der Ansprüche 1 bis 6,
**dadurch gekennzeichnet,**
**dass** der Sensorhalter (4) mindestens eine zweite Funktionsfläche (11) zur Ausrichtung des Sensorgehäuses (3) am Sensorhalter (4) aufweist.

8. Messsystem (1) nach einem der Ansprüche 1 bis 7,
**dadurch gekennzeichnet,**
**dass** der Sensorhalter (4) mit einer definierbaren ersten Kraft am Messrohr (2) anbringbar ist und dass das Sensorgehäuse (3) mit einer definierbaren, von der ersten Kraft unabhängigen, zweiten Kraft anbringbar ist, welche zweite Kraft über den Befestigungsmechanismus zwischen Sensorhalter (4) und Sensorgehäuse (3) am Messrohr (2) einleitbar ist.

9. Messsystem (1) nach einem der Ansprüche 1 bis 8,
**dadurch gekennzeichnet,**
**dass** zumindest der im Sensorgehäuse (3) verschiebbare erste Ultraschallsensor (5) beim Befestigen des Sensorgehäuses (3) am Sensorhalter (4) gegen Verschieben feststellbar ist.

10. Messsystem (1) nach einem der Ansprüche 1 bis 9,
**dadurch gekennzeichnet,**
**dass** der Sensorhalter (4) die Form eines Befestigungsblechs (26) mit prismatischer Ausbuchtung (27) auf der dem Messrohr (2) zugewandten Seite zur Ausrichtung des Sensorhalters (4) am Messrohr (2) und mit einer mittig angeordneten Aussparung (16) und daran angebrachten Seitenlaschen (28) zur Aufnahme und zur Ausrichtung des Sensorgehäuses (3) am Messrohr (2) aufweist.

11. Verfahren zur Montage eines Messsysteme (1) nach einem der Ansprüche 1 bis 10,
**dadurch gekennzeichnet,**
**dass** der Sensorhalter (4) auf dem Messrohr (2) angebracht wird und
anschließend das bereits vormontierte Sensorgehäuse (3) mit darin vorjustierten Ultraschallsensoren (5, 6) an dem Sensorhalter (4) ausgerichtet und anschließend festgemacht wird.

12. Verfahren zur Montage eines Messsysteme (1) nach Anspruch 11,
**dadurch gekennzeichnet,**
**dass** gleichzeitig mit der Befestigung des Sensorgehäuses (3) am Sensorhalter (4) zumindest der verschiebbare erste Ultraschallsensor (5) gegen Verschiebung gesichert wird.

## Claims

1. Measuring system (1) designed to determine and/or to monitor the flow of a measured medium (25) through a measuring tube (2) with at least a control/evaluation unit (8), which determines the volume flow and/or mass flow of the measured medium (25) flowing through the measuring tube (2) on the basis of ultrasonic measuring signals or on the basis of measured data, which are derived from the ultrasonic measuring signals, and with a sensor housing (3), said sensor housing (3) comprising a first ultrasonic sensor (5) and at least a second ultrasonic sensor (6), wherein at least the first ultrasonic sensor (5) is accommodated in a movable manner in the sensor housing (3),
said measuring system (1) further comprising a sensor holder (4), wherein said sensor holder (4) can be fixed on the measuring tube (2) and said sensor holder (4) has a fixing mechanism for the detachable fixing of the sensor housing (3) on the sensor holder (4), wherein the sensor housing (3) together with the ultrasonic sensors (5, 6) forms a unit which can be fixed on the sensor holder (4) and can be detached from the sensor holder (4),
**characterized in that** the first ultrasonic sensor and the second ultrasonic sensor are spring mounted and can therefore be pressed onto the measuring tube by a definable force,
wherein the fixing mechanism has a spring plate (20), which is an integral part of the sensor holder (4) or which can be connected to the sensor holder, as well as a clamping bracket (17), wherein said clamping bracket (17) is pivot-mounted on the sensor housing (3) and has an eccentric recess (18), wherein when the eccentric recess (18) engages in the spring plate (20), a force can be applied in the direction of the measuring tube (2) when the clamping bracket (17) is moved onto the sensor housing (3).

2. Measuring system (1) as claimed in Claim 1,
**characterized in that**
the sensor housing (3) has a gap in a sensor housing wall (12) facing towards the measuring tube (2), wherein at least the first ultrasonic sensor (5) at least partially projects out of the sensor housing (3) through said gap.

3. Measuring system (1) as claimed in Claim 1 or 2,
**characterized in that**
a seal between the measuring tube (2) and the sensor housing (3) can be arranged on the sensor housing wall (12) facing towards the measuring tube.

4. Measuring system (1) as claimed in Claim 3,
**characterized in that**
the sensor housing (3) has at least one stop (15) between the sensor housing wall (12) and the measuring tube (2) on the sensor housing wall (12) facing towards the measuring tube (2), wherein, when the measuring system (1) is installed said stop (15) rests on the measuring tube (2) and defines a distance h between the sensor housing wall (12) and the measuring tube (2), wherein the seal between the sensor housing wall (12) and the measuring tube (2) can be pushed in as far as said distance h.

5. Measuring system (1) as claimed in one of the Claims 1 to 4,
**characterized in that**
the sensor housing (3) has at least one stop (15) between the sensor housing wall (12) and the measuring tube (2) on the sensor housing wall (12) facing towards the measuring tube (2), wherein, when the measuring system (1) is installed said stop (15) rests on the measuring tube (2) and defines a distance h between the sensor housing wall (12) and the measuring tube (2), wherein, in the installed state, at least the first ultrasonic sensor (5) projects out of the sensor housing (3) as far as said distance h.

6. Measuring system (1) as claimed in one of the Claims 1 to 5,
**characterized in that**
the sensor holder (4) has a first functional surface (10) for the purpose of aligning the sensor holder (4) on the measuring tube (2).

7. Measuring system (1) as claimed in one of the Claims 1 to 6,
**characterized in that**
the sensor holder (4) has at least a second functional surface (11) for the purpose of aligning the sensor housing (3) on the sensor holder (4).

8. Measuring system (1) as claimed in one of the Claims 1 to 7,
**characterized in that**
the sensor holder (4) can be fixed on the measuring tube (2) with a definable first force and **in that** the sensor housing (3) can be fixed with a definable second force, which is independent of the first force, wherein said second force can be introduced on the measuring tube (2), between the sensor holder (4) and the sensor housing (3), via the fixing mechanism.

9. Measuring system (1) as claimed in one of the Claims 1 to 8,
**characterized in that**
at least the first ultrasonic sensor (5), which can be moved in the sensor housing (3), can be locked against movement when the sensor housing (3) is fixed on the sensor holder (4).

10. Measuring system (1) as claimed in one of the Claims 1 to 9,
**characterized in that**
the sensor holder (4) has the shape of a fixing plate (26) with a prismatic bulge (27) on the side facing towards the measuring tube (2) for the purpose of aligning the sensor holder (4) on the measuring tube (2), and with a recess (16) arranged centrally and side tabs (28) fixed thereon for the purpose of accommodating and aligning the sensor housing (3) on the measuring tube (2).

11. Procedure for mounting a measuring system (1) as claimed in one of the Claims 1 to 10,
**characterized in that**
the sensor holder (4) is fixed on the measuring tube (2), and then the already preassembled sensor housing (3), with preadjusted ultrasonic sensors (5, 6) accommodated in said housing, is aligned on said sensor holder (4) and then fixed in place.

12. Procedure for mounting a measuring system (1) as claimed in Claim 11, **characterized in that**
at least the movable first ultrasonic sensor (5) can simultaneously be secured against movement when the sensor housing (3) is secured on the sensor holder (4).

## Revendications

1. Système de mesure (1) destiné à la détermination et/ou à la surveillance du débit d'un produit mesuré (25) à travers un tube de mesure (2) avec au moins une unité de régulation / d'exploitation (8), laquelle détermine sur la base des signaux de mesure ultrasonores ou sur la base des données de mesure, qui sont dérivées des signaux de mesure ultrasonores, le débit volumique et/ou le débit massique du produit mesuré (25) s'écoulant dans le tube de mesure (2), et avec un boîtier de capteur (3), lequel boîtier de capteur (3) comprend un premier capteur à ultrasons (5) et au moins un deuxième capteur à ultrasons (6), au moins le premier capteur à ultrasons (5) étant logé de manière à pouvoir être déplacé dans le boîtier de capteur (3),
lequel système de mesure (1) comporte en outre un support de capteur (4), lequel support de capteur (4) peut être fixé sur le tube de mesure (2) et lequel support de capteur (4) présente un mécanisme de fixation en vue d'une fixation amovible du boîtier de capteur (3), le boîtier de capteur (3) formant avec les capteurs à ultrasons (5, 6) une unité pouvant être fixée sur le support de capteur (4) et pouvant être détachée du support de capteur (4),
**caractérisé en ce que** le premier capteur à ultrasons et le deuxième capteur à ultrasons sont montés de manière élastique et, de ce fait, peuvent être pressé contre le tube de mesure par une force définissable,
le mécanisme de fixation présentant une tôle élastique (20), laquelle fait partie intégrante du support de capteur (4) ou laquelle peut être reliée avec le support de capteur, ainsi qu'un étrier de serrage (17), lequel étrier de serrage (17) est monté de façon pivotante sur le boîtier de capteur (3) et présente un évidement excentrique (18), une force pouvant être appliquée en direction du tube de mesure (2) lors du rabattement de l'étrier de serrage (17) sur le boîtier de capteur (3) grâce à un engagement de l'évidement excentrique (18) dans la tôle élastique (20).

2. Système de mesure (1) selon la revendication 1,
**caractérisé**
**en ce que** le boîtier de capteur (3) présente une fente sur une paroi de boîtier de capteur (12) faisant face au tube de mesure (2), fente à travers laquelle au moins le premier capteur à ultrasons (5) déborde partiellement du boîtier de capteur (3).

3. Système de mesure (1) selon la revendication 1 ou 2,
**caractérisé**
**en ce qu'**il est possible de disposer un joint entre le tube de mesure (2) et le boîtier de capteur (3), sur la paroi de boîtier de capteur (12) faisant face au tube de mesure.

4. Système de mesure (1) selon la revendication 3,
**caractérisé**
**en ce que** le boîtier de capteur (3) présente, sur la paroi de boîtier de capteur (12) faisant face au tube de mesure (2), au moins une butée (15) entre la paroi de boîtier de capteur (12) et le tube de mesure (2), laquelle butée (15) repose à l'état monté du système de mesure (1) sur le tube de mesure (2) et définit entre la paroi de boîtier de capteur (12) et le tube de mesure (2) une distance h, distance h jusqu'à laquelle le joint peut être pressé entre la paroi de boîtier de capteur (12) et le tube de mesure (2).

5. Système de mesure (1) selon l'une des revendications 1 à 4,
**caractérisé**
**en ce que** le boîtier de capteur (3) présente, sur la paroi de boîtier de capteur (12) faisant face au tube de mesure (2), au moins une butée (15) entre la paroi de boîtier de capteur (12) et le tube de mesure (2), laquelle butée (15) repose à l'état monté du système de mesure (1) sur le tube de mesure (2) et définit entre la paroi de boîtier de capteur (12) et le tube de mesure (2) une distance h, distance h jusqu'à laquelle au moins le premier capteur à ultrasons (5) déborde du boîtier de capteur (3) à l'état monté du système de mesure.

6. Système de mesure (1) selon l'une des revendications 1 à 5,
**caractérisé**
**en ce que** le support de capteur (4) présente une première surface fonctionnelle (10) destinée à l'alignement du support de capteur (4) sur le tube de mesure (2).

7. Système de mesure (1) selon l'une des revendications 1 à 6,
**caractérisé**
**en ce que** le support de capteur (4) présente au moins une deuxième surface fonctionnelle (11) destinée à l'alignement du boîtier de capteur (3) sur le support de capteur (4).

8. Système de mesure (1) selon l'une des revendications 1 à 7,
**caractérisé**
**en ce que** le support de capteur (4) peut être fixé sur le tube de mesure (2) avec une première force définissable et **en ce que** le boîtier de capteur (3) peut être fixé avec une deuxième force définissable, indépendante de la première force, laquelle deuxième force peut être exercée sur le tube de mesure (2), entre le support de capteur (4) et le boîtier de capteur (3), par l'intermédiaire d'un mécanisme de fixation.

9. Système de mesure (1) selon l'une des revendications 1 à 8,
**caractérisé**
**en ce qu'**au moins le premier capteur à ultrasons (5), déplaçable à l'intérieur du boîtier de capteur (3), peut être bloqué pour empêcher son déplacement lors de la fixation du boîtier de capteur (3) sur le support de capteur (4).

10. Système de mesure (1) selon l'une des revendications 1 à 9,
**caractérisé**
**en ce que** le support de capteur (4) présente la forme d'une tôle de fixation (26) avec une courbure prismatique (27) sur le côté faisant face au tube de mesure (2), laquelle est destinée à l'alignement du support de capteur (4) sur le tube de mesure (2), et avec un évidement (16) disposé de façon centrée et des pattes latérales (28) qui y sont fixées, lesquelles sont destinées à la réception et à l'alignement du boîtier de capteur (3) sur le tube de mesure (2).

11. Procédé destiné au montage d'un système de mesure (1) selon l'une des revendications 1 à 10,
**caractérisé**
**en ce que** le support de capteur (4) est fixé sur le tube de mesure (2), puis le boîtier de capteur (3) déjà prémonté, avec les capteurs à ultrasons (5, 6) préajustés logés dans ledit boîtier, est aligné sur le support de capteur (4) puis fixé.

12. Procédé destiné au montage d'un système de mesure (1) selon la revendication 11,
**caractérisé**
**en ce qu'**au moins le premier capteur à ultrasons déplaçable (5) peut être simultanément protégé contre un déplacement avec la fixation du boîtier de capteur (3) sur le support de capteur (4).
